# EUROPEAN PATENT APPLICATION

(11) **EP 1 681 573 A1**
(43) Date of publication of application: **19.07.2006**
(21) Application number: 06000131.0
(22) Date of filing: 04.01.2006
(51) Int. Cl.: G01P 13/00, G01P 7/00

(54) **Vehicle stopped-judgement apparatus and stopped-judgement method in a velocity-calculation apparatus**

(30) Priority: 12.01.2005 JP 2005005608
(71) Applicant: MACNICA, INC., Yokohama-shi Kanagawa 222-8561 (JP)
(72) Inventor: Kakuda, Yasunobu, Yokohama-shi Kanagawa 222-8561 (JP); Hosaka, Jin, Yokohama-shi Kanagawa 222-8561 (JP)
(74) Representative: Möbus, Steffen

(57) **Abstract**

By calculating the velocity from acceleration information that is obtained from an acceleration sensor that is located in a vehicle, this invention, determines whether or not the vehicle is stopped from only the acceleration information obtained from the acceleration sensor without using angle information for which there is a high possibility of error, so it is possible to improve the accuracy of the velocity value.

A vehicle stopped-judgment apparatus in a velocity-calculation apparatus comprising: an angle-calculation means 2 that calculates the road-surface angle from the acceleration component Ax that is parallel with the road surface and acceleration component Az that is perpendicular to the road surface and that are obtained from an acceleration sensor 1 installed in a vehicle; and a velocity-calculationmeans 3 that calculates the vehicle velocity using the road-surface angle and the acceleration component Ax obtained from the acceleration sensor 1; and that comprises: an unsteadiness-detection means 4 that detects the size of unsteadiness in the acceleration component Ax or Az obtained from the acceleration sensor 1; and a stopped-judgment means 5 that performs a comparison to determine whether or not the size of unsteadiness exceeds a certain set value, and when it does not exceed the set value, determines that said vehicle is stopped.

## Description

### BACKGROUND OF THE INVENTION

### Field of the Invention:

This invention relates to a vehicle stopped-judgment apparatus and stopped-judgment method in a velocity-calculation apparatus that, when calculating the velocity from acceleration information obtained from an acceleration sensor located in a vehicle, determines whether the vehicle is moving or stopped before calculating the vehicle velocity.

### [Description of the Related Art]

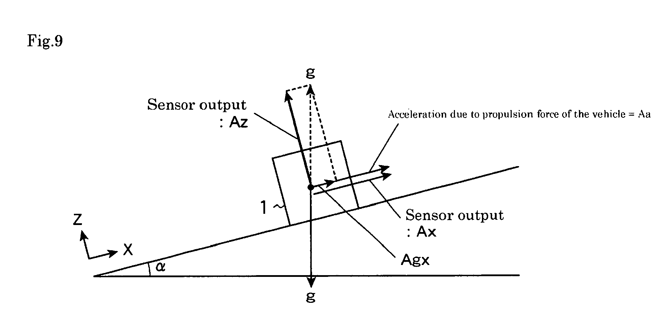

When calculating the current velocity Vn of a vehicle from the acceleration information Ax, Az from a two-axis acceleration sensor, for example, that is installed in a vehicle as shown in Fig. 9, the velocity Vn is found by integrating the acceleration component Ax that is parallel with the road surface with respect to time (Vn = Vn-1 + (Ax - g sinα)dt). However, there is a possibility that effects of unsteadiness (fluctuation) in acceleration due to engine vibration during idling and unevenness of the road surface when the vehicle is moving will be included in the acceleration information Ax, Az that is obtained from the acceleration sensor, and there is also a possibility that the road-surface angle α (= tan⁻¹ (Ax/Az)) itself that is found using this information will contain error, so the effect of the unsteadiness in acceleration will appear in the value of the velocity Vn that is calculated by directly using this road-surface angle α.

In Fig. 9, of the acceleration component Ax that is parallel with the road surface and that is detected by the acceleration sensor 1, Agx is the acceleration component parallel to the road surface due to gravity g, and when Aa is taken to be the acceleration of the vehicle parallel to the road surface, Ax = Agx + Aa, so for example, when the vehicle is operating at constant velocity, the acceleration of the vehicle Aa is 0, and the acceleration component Ax = Agx, so it is not possible to distinguish from Ax when the vehicle is stopped while idling. In this kind of case, when the velocity Vn is found using the acceleration information Ax, Az from the acceleration sensor, the vehicle is determined to be stopped (Vn = 0) even though the vehicle is moving, or conversely, there is a possibility that a result that the vehicle is moving may be obtained even though the vehicle is stopped, so it may not be possible to apply the velocity Vn calculated as described above immediately as the current velocity.

Therefore, in order to be able to distinguish whether the vehicle is moving at constant velocity or when stopped during idling, it becomes necessary to add some assistance (judgment) when calculating the velocity, however, conventionally, as a method for determining whether or not the vehicle is moving, is a method of applying a specified or greater braking force to the vehicle, and determining that the vehicle is stopped when the condition that the absolute value of the acceleration in the forward or backward direction acting on the vehicle is a specified value or less is satisfied (refer to patent document 1).

### [Patent Document 1]

### Japanese patent Publicaiton no. 2002-242746 (paragraphs 0008 - 0009)

### [Problem to be Solved by the Invention]

With the method disclosed in patent document 1, in addition to the condition of applying a braking force when the vehicle reaches a certain velocity, a condition that the absolute velocity of the acceleration be a set value or less is used, so the state just prior to stopping when the vehicle is not completely stopped is also determined as being stopped. Therefore, when the velocity Vn is calculated from the acceleration information Ax, Az from the acceleration sensor as described above based on that judgment result, there is a high possibility that the effect due to difference in the spring constant of the front and rear suspension will appear in the acceleration component Ax that is used in the calculation of the velocity Vn, so there will be a loss of accuracy in the found velocity Vn.
Moreover, when the road surface in inclined, the certain set value mentioned above is changed in order to reflect the road-surface angle (see paragraphs 0032 to 0033), and the effect of the incline of the vehicle immediately before stopping will appear in the acceleration sensor installed in the vehicle, so even though the set value is changed, it may not be valid to calculate the velocity Vn using the equation mentioned above.

From the background described above, this invention was invented in order to solve the problem points with the conventional method, and provides a vehicle stopped-judgment apparatus and stopped-judgment method in a velocity-calculation apparatus that determines whether or not the vehicle is stopped from just the acceleration information obtained from the acceleration sensor without having to use angle information that has a possibility of containing error, and makes it possible to improve the accuracy of the vehicle velocity.

### SUMMARY OF THE INVENTION

### [Means for Solving the Problems]

The vehicle stopped-judgment apparatus according to claim 1 is a velocity-calculation apparatus comprising: an angle-calculation means that calculates the road-surface angle from the acceleration component Ax that is parallel with the road surface and acceleration component Az that is perpendicular to the road surface and that are obtained from an acceleration sensor installed in a vehicle; and a velocity-calculation means that calculates the vehicle velocity using the aforementioned road-surface angle and the acceleration component Ax obtained from the acceleration sensor; and that comprises as compositional elements: an unsteadiness-detection means that detects the size of unsteadiness (fluctuation) in the acceleration component Ax or Az obtained from the aforementioned acceleration sensor; and a stopped-judgment means that performs a comparison to determine whether or not the aforementioned size of unsteadiness exceeds a certain set value, and when it does not exceed the set value, determines that the vehicle is stopped.

As described above, when finding the velocity Vn of the vehicle by integrating the difference between the acceleration Ax obtained from the acceleration sensor and g sinα, there is a possibility that the velocity cannot be calculated accurately due to the effects of unsteadiness in the acceleration Ax, Az caused by engine vibration during idling, uneven road surface when moving, and the like. For example, when the vehicle is stopped while idling, the effect of unsteadiness that appears in the acceleration components Ax, Az is mainly due to the engine vibration, and when the vehicle is moving, there is a strong tendency for the effect of the unsteadiness due to vehicle vibration or suspension vibration caused by an uneven road surface to appear, and when moving it becomes remarkably much easier for the effect caused by an uneven road surface to appear in the acceleration components Ax, Az than the effect caused by engine vibration. Az becomes large when the vehicle receives an acceleration in the same downward direction as the acceleration due to gravity g, and becomes small when it receives an upward acceleration.

In this way, the unsteadiness in the acceleration has a tendency to be largerwhen the vehicle is moving than when stopped, so by monitoring the size of the unsteadiness in the acceleration components Ax, Az obtained from the acceleration sensor, and setting whether or not the size of the unsteadiness is greater than a certain set value as judgment criteria for determining whether the vehicle is stopped or moving, the judgment criteria becomes clear and judgment becomes easy to perform, and it possible to accurately determine whether the vehicle is stopped or moving; so when finding the velocity Vn using the acceleration information Ax, Az, it is possible to eliminate the possibility of determining that the vehicle is stopped when it is moving, and the possibility of determining that the vehicle is moving when it is stopped. Actually, for example, in the case where there is hardly any effect of the engine vibration or uneven road surface when moving at high speed by force of habit on a paved road surface, the unsteadiness in Ax, Az is small so as a result there is a possibility that the velocity will be 0, however, from the judgment result that the vehicle is moving, the possibility of the newly calculated velocity Vn being 0 is negated, and by maintaining the previous velocity Vn-1 it is possible to avoid obtaining an erroneous velocity.

Therefore, by detecting the size of the unsteadiness in the acceleration component Ax or Az obtained from the acceleration sensor and determining whether or not the vehicle is moving or stopped based on a judgment of whether or not the size of that unsteadiness is greater than a certain set value, it becomes easy to distinguish between unsteadiness caused by engine vibration and unsteadiness caused by vehicle vibration or suspension vibration due to an uneven road surface, and thus it becomes possible to accurately determine whether the vehicle is moving or stopped.

The vehicle stopped-judgment apparatus according to claim 2 is the invention according to claim 1 that comprises as a compositional element: a first calculation means that finds the absolute value of the difference between the maximum value and minimum value as the size of the unsteadiness from a plurality of acceleration component data Ax or Az that is stored for each time by the unsteadiness-detection means; and where the stopped-judgment means performs a comparison to determine whether or not the absolute value of the difference between the maximum value and minimum value of the acceleration component Ax or Az obtained by the first calculation means exceeds a certain set value. The stopped-judgment means determines that the vehicle is stopped when the absolute value of the difference between the maximum value and minimum value does not exceed that certain set value (is the set value or less).

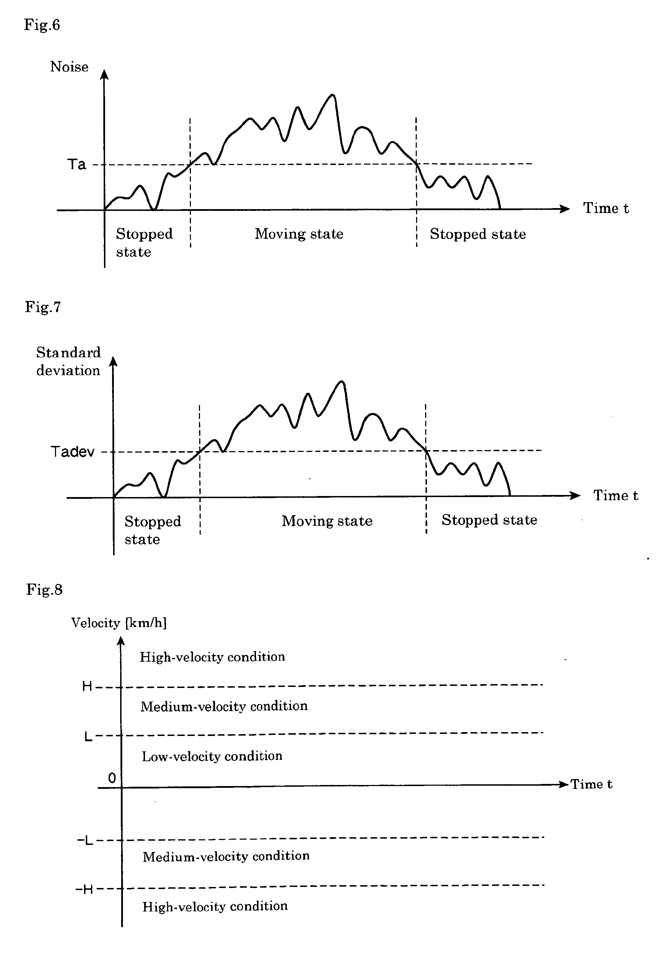

More specifically, the difference Adif (Axdif, Azdif) between the maximum value Amax (Axmax or Azmax) and the minimum value Amin (Axmin, Azmin) of the acceleration A (Ax, or Az) can be considered as an index that indicates the size of the unsteadiness (noise) of the acceleration components Ax, Az. In the process of the vehicle going from a stopped state to accelerating, decelerating and then back to a stopped state, when the noise in the acceleration A, which is the absolute value of the difference (Adif) between the maximum value Amax and minimum value Amin, is plotted over time along the horizontal axis, a curve as shown in Fig. 6 is drawn, and as shown by the dashed line a boundary appears between being stopped and moving, so by using this boundary value as the aforementioned certain set value Ta, it becomes easy to determine whether the vehicle is stopped or moving. The dimension of Ta is the same as that of Ax, and is m/s².

Therefore, of the plurality of acceleration data A stored at each time, the first calculation means calculates the differenceAxdif (Axmax-Axmin) orAzdif (Azmax-Azmin) between the maximum value Axmax or Azmax and the minimum value Axmin or Azmin for each time, and as shown in Fig. 6, by setting the value of the boundary where it is possible to judge when the vehicle is stopped or moving by the difference between size of the difference Axdif (Azdif) between the maximum value Axmax (Azmax) and minimum value Axmin (Azmin) as the certain set value Ta, and by determining whether or not the vehicle is stopped based on the comparison of whether or not the calculated difference Axdif between the aforementioned maximum value and minimum value exceeds the set value Ta, it becomes possible to clearly determine whether or not the vehicle is stopped.

The invention according to claim 3 is the invention of claim 2 that comprises as a compositional element a stopped-judgment means that, when a plurality of acceleration components Axn or Azn that are stored in the velocity-calculation apparatus are taken to be 1 set, determines from a plurality of sets of data whether or not there is a plurality of sets in which the absolute value of the difference between the maximum value and minimum value of the acceleration components obtained by the first calculation means exceeds a certain set value.

When the plurality of data for the acceleration Axn or Azn for each time that is stored in the velocity-calculation apparatus is divided into units of a plurality of data such as Ax1 to Ax5 (Az1 to Az5), for example, and taking this plurality of data Ax1 to Ax5 (Az1 to Az5) as 1 set, this 1 set is updated at each time (At) with a plurality of data such that Ax1 is updated --> Ax2 is updated --> Ax3 is updated --> Ax4 is updated --> Ax5 is updated, so that from the time Ax1 is updated until the next time Ax1 is updated requires a time of At x 5.

On the other hand, the values for some data Axn (Azn) may become instantaneously large or small due to the effect of the precision of the acceleration sensor (element), or due to the effect of noise that occurs in the transmission path that is not noise from the engine vibration, even though the vehicle is actually still. For example, at some point of time, supposing that the value of Ax3 when updated while the vehicle is still is 10, and that the other data of the 1 set (Ax1 to Ax5) that this updated Ax3 belongs to is Ax1 = 2, Ax2 = 3, Ax4 = 2 and Ax5 = 2, and supposing that the still state of the vehicle continues and that there is no further change in the update values of Ax1, Ax2, Ax4 and Ax5, then the absolute value of the difference between the maximum value and the minimum value of the acceleration component at time Δt x 5 becomes 8. Here, when the aforementioned set value Ta is taken to be 7 or less, the absolute value of the difference between the maximum value and minimum value exceeds the set value Ta, so the stopped-judgment means falsely determines that the vehicle is moving during this time Δt x 5.

Therefore, by having the stopped-judgment means determine fromdata of apluralityof sets, where 1 set is data for a plurality of acceleration components Axn or Azn stored in the velocity-calculation apparatus, whether or not the vehicle is stopped by determining whether or not there is a plurality of sets in which the absolute value of the difference between the maximum value and minimum value of the acceleration components obtained by the first calculation means exceeds a set value, it becomes easy to find and remove data that sticks out due to the effect of the precision of the acceleration sensor or the effect of the noise that occurs in the transmission path, and thus it is possible to avoid faulty judgment as described above.

More specifically, when the group of data from Axn1 to Axn5 is taken to be one set, for example, then about 10 sets (a to j) such as a = Ax01 to Ax05, b = Ax11 to Ax15, c = Ax21 to Ax25, d = Ax31 to Ax35, ... i = Ax81 to Ax85, and j = Ax91 to Ax95 are always stored in the velocity-calculation apparatus, and from these 10 sets, the stopped-judgment means determines whether the vehicle is stopped or moving according to the number of sets in which the absolute value of the difference between the maximum value and minimum value of the acceleration component exceeds the set value Ta. Here, by determining that the vehicle is moving when of the 10 sets, for example, half or 5 or more sets contain acceleration components such that the absolute value exceeds the set value Ta, then it can be said there is a high probability that the vehicle is actually moving, so it is possible to improve the reliability of the judgment by the stopped-judgment means and to eliminate faulty judgment as described above. There are cases where the number of data in 1 set is greater or less than 5, and there are cases where the number of sets is greater or less than 10.

It is feasible that this includes the case in which of a plurality of acceleration components, the acceleration of the engine and suspension vibration, and the element and transmission path vibration will cancel each other out, however, it is not thought that there is a high probability that the element and transmission path vibration alone will affect the data. Therefore, of the 10 sets, regardless of whether or not they are continuous, as long as more than half or any 5 sets or more have acceleration components that exceed the set value Ta, it can be said that rather than the effect of the element or transmission path vibration, there is a high possibility that the actual acceleration and deceleration of the vehicle will appear in the data, so in that case, by determining that the vehicle is moving (not still), it is possible to eliminate faulty judgment caused by element or transmission path vibration.

Particularly, by determining that the vehicle is moving when 5 continuous sets or more of the 10 sets contain acceleration components such that the absolute value exceeds the set value Ta, it can be said that there is even a higher possibility that the acceleration is continuously changing and that the vehicle is actually moving, so the reliability of the judgment by the stopped-judgment means is further improved.

The vehicle stopped-judgment apparatus according to claim 4 is the invention according to claim 1 that comprises as a compositional element: a second calculation means that calculates the square root of the sumof squares of the difference between the average value of a plurality of acceleration component data Ax or Az at each time that is stored by the unsteadiness-detection means and the acceleration component at each time as the size of the unsteadiness; and wherein the stopped-judgment means performs a comparison to determine whether or not the standard deviation of the acceleration component obtained by the second calculation means exceeds a certain set value. The second calculation means calculates √Σ(An - Aav)², or in other words, the standard deviation of A (Ax or Az). Σ signifies the total for n starting from 1 to time N of the stopped judgment. The stopped-judgment means determines that the vehicle is stopped when the standard deviation of A (Ax or Az) does not exceed a certain set value.

In addition to the difference Adif between the maximum value Amax and minimum value Amin described above, the standard deviation of A (Ax or Az) can be considered to be an index showing the size of the unsteadiness in the acceleration components Ax, Az. The standard deviation of A (Ax or Az) (√Σ(Axn - Axav)², or √Σ(Azn - Azav)²) expresses the degree of change in A in a certain unit of time, so the standard deviation of A becomes larger the larger the change in A (Ax or Az) is, or in other words, the larger the difference between A (Ax, Az) and the average value Aav (Axav, Azav) of a plurality of data is. On the other hand, as described above, the change in A becomes large when the vehicle is moving, so as shown in Fig. 7, by using the standard deviation of A and determining whether or not the vehicle is stopped based on a comparison to determine whether or not the standard deviation of A exceeds a certain set value, it becomes possible to clearly determine whether or not the vehicle is stopped.

In the process where the vehicle goes from the stopped state to accelerating, decelerating and then back to the stopped state, by plotting the standard deviation of the acceleration A over time along the horizontal axis, a curve, similar to that in Fig. 6, is drawn as shown in Fig. 7, and as shown by the dashed line, a boundary appears betweenwhen the vehicle is stopped and moving, and since the effect of noise of the acceleration A verynoticeably appears in the standard deviation of A from the difference between the maximum value Amax and minimum value Amin, then by using this boundary value as a certain set value Tadev, it becomes easier to determine when the vehicle is stopped or moving than when using Adif.

The vehicle stopped-judgment apparatus according to claim 5 is the invention according to any one of the claims 1 to 4 that comprises as a compositional element: a comparison means that, when the vehicle velocity is divided into at least the two velocity ranges low velocity and high velocity, determines which of the aforementioned velocity ranges the vehicle velocity calculated by the velocity-calculation means belongs to, and where, based on the judgment results by the comparison means, the unsteadiness-detection means detects the size of unsteadiness, and the stopped-judgment means performs a comparison to determine whether or not the size of the unsteadiness for each velocity range exceeds a certain set value. From the aspect of judgment precision of the comparison means, it is suitable to divide the vehicle velocity into three or more velocity ranges that include medium velocity.

For example, when the vehicle is moving at low velocity for a fixed amount of time or more, such as in a traffic jam, it becomes easy for the angle of the vehicle to change due to the effect of the suspension caused by repeated acceleration and deceleration, and even though the velocity is near 0, there is a possibility that the vehicle will be judged to be moving. On the other hand, when the vehicle is traveling at a constant high speed, it becomes difficult for the effect of the road surface or suspension to appear, as well as it is difficult for the angle of the vehicle to change, so the noise in the acceleration A is small, and even though the vehicle is moving, there is a possibility that the vehicle will be judged to be stopped. Moreover, when the vehicle suddenly goes from a moving state to a stopped state such as during an emergency stop, even though the vehicle is stopped, changes in the acceleration A occur due to the effect of the vehicle vibration immediately after the vehicle is stopped, and the vehicle may not be judgedtobe stopped, and in each case, it may become difficult to determine whether the vehicle is moving or stopped by just the noise in the acceleration A alone.

Therefore, as shown in Fig. 8, the vehicle velocity is divided into at least two velocity ranges, low velocity, medium velocity and high velocity, and a judgment of determining whether the vehicle is moving or stopped from the acceleration noise is added, and the unsteadiness-detection means of claim 1 performs a comparison for each velocity range to determine whether or not the size of the unsteadiness exceeds a certain set value, and by having the stopped-judgment means determine that the vehicle is stopped when the size does not exceed the value, the velocity range is reflected in the premise of the judgment by the unsteadiness-detection means, so it becomes possible to avoid the faulty judgment that occurs when relying only on the acceleration noise, and to reduce the error caused by the size of the velocity. The unsteadiness-detection means referred to here corresponds to the first calculation means of claim 2 and claim 3, and to the third calculation means of claim 4.

Similarly, by having the stopped-judgment means of claim 2 and claim 3 perform a comparison to determine whether or not the absolute value of the difference between the maximum value Amax and minimum value Amin of the acceleration exceeds a certain set value, and having the stopped-judgment means of claim 4 perform a comparison to determine whether or not the standard deviation of the acceleration A exceeds a certain set value, the velocity range is reflected on the judgment by the unsteadiness-detection means, so it becomes possible to reduce the error caused by the size of the velocity.

The invention according to claim 6 corresponds to the invention of claim 1 and is a velocity-calculation apparatus comprising as compositional elements: an angle-calculation means that calculates the road-surface angle from the acceleration component Ax that is parallel with the road surface and acceleration component Az that is perpendicular to the road surface and that are obtained from an acceleration sensor installed in a vehicle; and a velocity-calculation means that calculates the vehicle velocity using the aforementioned road-surface angle and the acceleration component Ax obtained from the acceleration sensor; and that comprises as compositional elements: a process in which an unsteadiness-detection means detects the size of unsteadiness (fluctuation) in the acceleration component Ax or Az obtained from the aforementioned acceleration sensor; and a process in which a stopped-judgment means performs a comparison to determine whether or not the aforementioned size of unsteadiness exceeds a certain set value, and when it does not exceed the set value, determines that the vehicle is stopped.

The invention according to claim 7 is the invention according to claim 6 and corresponds to the invention of claim 2 and comprises as compositional elements: a process in which a first calculation means finds the absolute value of the difference between the maximum value and minimum value as the size of the unsteadiness from a plurality of acceleration component data Ax or Az that is stored for each time by the unsteadiness-detection means; and a process in which a stopped-judgment means performs a comparison to determine whether or not the absolute value of the difference between the maximum value and minimum value of the acceleration component obtained by the first calculation means exceeds a certain set value.

The invention according to claim 8 is the invention of claim 7 and corresponds to the invention of claim 3 and comprises as a compositional element: a process wherein, when the data of a plurality of acceleration components Axn or Azn that are stored in the velocity-calculation apparatus are taken to be 1 set, the stopped-judgment means determines from a plurality of sets of data whether or not there is a plurality of sets in which the absolute value of the difference between the maximum value and minimum value of the acceleration components obtained by the first calculation means exceeds a certain set value.

The invention according to claim 9 is the invention according to claim 6 and corresponds to the invention of claim 4 and comprises as compositional elements: a process in which a second calculation means that calculates the square root of the sum of squares of the difference between the average value of a plurality of acceleration component data Ax or Az at each time that is stored by the unsteadiness-detection means and the acceleration component at each time as the size of the unsteadiness; and a process in which the stopped-judgment means performs a comparison to determine whether or not the standard deviation of the acceleration component obtained by the second calculation means exceeds a certain set value.

The invention according to claim 10 is the invention according to any one of the claims 6 to 9 and corresponds to the invention of claim 5 and comprises as a compositional element: a process in which a comparison means, when the vehicle velocity is divided into at least the two velocity ranges low velocity and high velocity, determines which of the aforementioned velocity ranges the vehicle velocity calculated by the velocity-calculation means belongs to; a process in which, based on the judgment results by the comparison means, the unsteadiness-detection means detects the size of unsteadiness; and a process in which the stopped-judgment means performs a comparison to determine whether or not the size of the unsteadiness for each velocity range exceeds a certain set value.

### [Effect of the Invention]

As described above, this invention, determines whether or not a vehicle is stopped from only acceleration information obtained from an acceleration sensor without using angle information for which there is a high possibility of error, so it is possible to obtain a more accurate judgment result, and by finding the vehicle velocity using this judgment result, it is possible to improve the accuracy of the vehicle velocity.
BRIEF DESCRIPTION OF THE DRAWINGS
Fig. 1 is a block diagram of a vehicle stopped-judgment apparatus comprising an unsteadiness-detection means and stopped-judgment means.
Fig. 2 is a block diagram of a vehicle stopped-judgment apparatus comprising an unsteadiness-detection means and stopped-judgment means having a first calculation means.
Fig. 3 is a block diagram of a vehicle stopped-judgment apparatus comprising an unsteadiness-detection means and stopped-judgment means having a second calculation means.
Fig. 4 is a block diagram of a vehicle stopped-judgment apparatus comprising a comparison means and velocity-calculation means.
Fig. 5 is a flowchart showing an example of the work procedure of the vehicle stopped-judgment apparatus.
Fig. 6 is a graph with time along the horizontal axis and showing the relationship of the state of the vehicle and the difference between the maximum value and minimum value of the acceleration.
Fig. 7 is a graph with time along the horizontal axis and showing the relationship between the state of the vehicle and the standard deviation of the acceleration.
Fig. 8 is a graph showing an example of dividing up velocity ranges.
Fig. 9 is a schematic diagram showing the acceleration components that are detected by the acceleration sensor installed in a vehicle on an inclined road surface.

### DESCRIPTION OF THE PREFERRED EMBODIMENTS

The preferred embodiments of the invention will be explained below using the drawings.

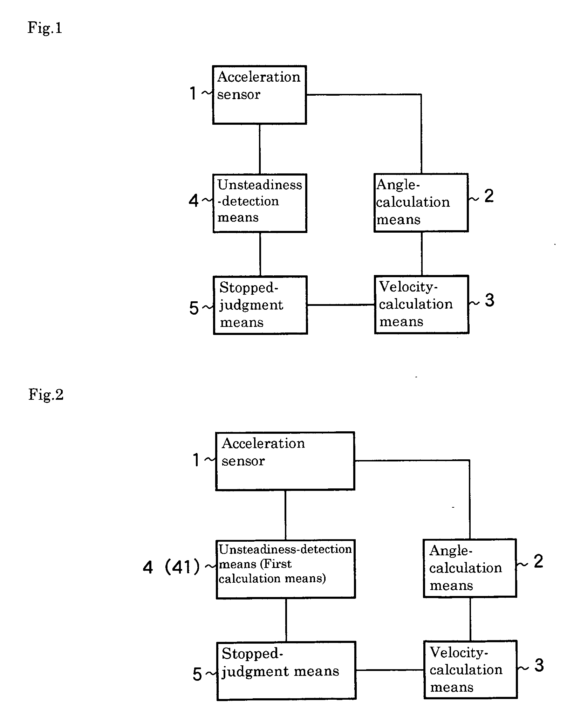

Fig. 1 is a block diagram of the vehicle stopped-judgment apparatus of claim 1 which is a velocity-calculation apparatus comprising: an angle-calculation means 2 such as a CPU that calculates the road-surface angle α from the acceleration component Ax that is parallel with the road surface and the acceleration component Az that is perpendicular to the road surface that are obtained from the acceleration sensor 1 installed in the vehicle; a velocity-calculation means 3 such as a CPU that calculates the vehicle velocity using the aforementioned road-surface angle α and the acceleration component Ax that is obtained from the acceleration sensor 1; a unsteadiness-detection means 4 such as a CPU that detects the size of unsteadiness of the acceleration component Ax or Az obtained from the aforementioned acceleration sensor 1; and a stopped-judgment means 5 such as a CPU that determines whether or not the size of the aforementioned unsteadiness exceeds a certain set value, and determines that the vehicle is stopped when it does not exceed the value.

A 2-axis acceleration sensor or 3-axis acceleration sensor having a function for detecting the acceleration in at least the two directions Ax and Az as shown in Fig. 9 is used as the acceleration sensor 1. The acceleration sensor 1 can be an electrostatic capacitance type, a piezoelectric type, oscillation type or the like as long as it has a function for detecting the acceleration in at least the two directions Ax and Az.

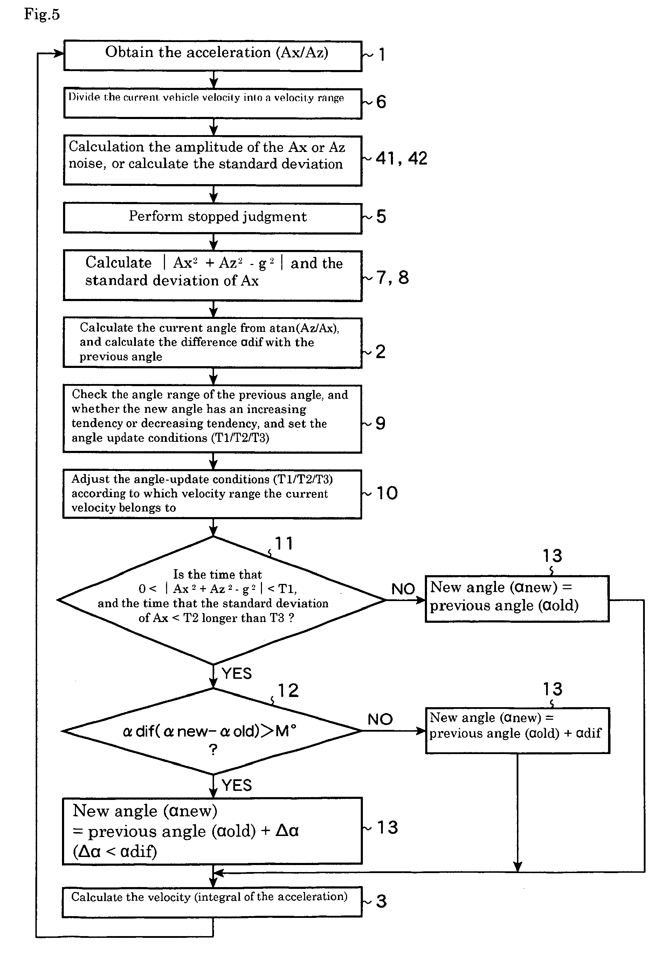

The angle-calculation means 2 temporarily calculates the road-surface angle α from the acceleration information Ax, Az obtained from the acceleration sensor 1 as α = tan⁻¹ (Ax/Az). As shown in Fig. 5, the road-surface angle α found here may finally change according to the judgment result from the vehicle stopped-judgment apparatus. The road-surface angle α that is calculated by the angle-calculation means 2 is sent together with Ax from the acceleration sensor 1 from the angle-calculation means 2 to the velocity-calculation means 3, and the velocity-calculation means 3 uses velocity Vn-1 at the previous time n-1 that is calculated at each fixed time, Ax and α, and calculates the velocity Vn at the current time n as Vn = Vn-1 + (Ax - g sinα) dt.

The data for Ax and Az that is detected by the acceleration sensor 1 at each fixed time is sent to the unsteadiness-detection means 4, and the unsteadiness-detection means 4 detects the size of the unsteadiness in Ax or Az, after which the stopped-judgment means 5 performs its comparison and judgment. The unsteadiness-detection means 4 detects unsteadiness in the acceleration, such as differences in the maximum value and minimum value of a plurality of Ax or Az obtained at each time, and the stopped-judgment means 5 performs a comparison to determine whether or not the unsteadiness in the acceleration is within or exceeds a certain set value, and from that result, determines whether or not the vehicle is stopped.

Fig. 2 is a block diagram showing the vehicle stopped-judgment apparatus of claim 2 in which the unsteadiness-detection apparatus 4 comprises a first calculation means 41 such as a CPU that of the plurality of acceleration data Ax or Az that is stored for each time, finds the absolute value of the difference Axdif (Azdif) between maximum value Axmax (Azmax) and the minimum value Axmin (Azmin) as the size of the unsteadiness of the acceleration Ax (Az), and wherein the stopped-judgment means 5 performs a comparison to determine whether or not the absolute value of the difference Axdif (Azdif) between the aforementioned maximum value Axmax (Azmax) and minimum value Axmin (Azmin) obtained by the first calculation means 41 exceeds a certain set value Ta.

The data for Ax and Az detected by the acceleration sensor 1 for each fixed time is sent to the first calculation means 41 of the unsteadiness-detection means 4, and from that plurality of data, the first calculation means 41 finds the maximum value Axmax (Azmax) and the minimum value Axmin (Azmin) during calculation, and calculates the absolute value of the difference Axdif (Azdif) between that maximum value Axmax (Azmax) and the minimum value Axmin (Azmin) ( |Axmax - Axmin I or |Azmax - Azmin |). The absolute value of the difference Axdif (Azdif) between the maximum value Axmax (Azmax) and the minimum value Axmin (Azmin) |Axmax - Axmin| ( |Azmax - Azmin|) calculated here is sent to the stopped-judgment means 5.

As shown in Fig. 6, a certain set value Ta (m/s2), which clearly shows the boundary values between being stopped and moving when the absolute value of the difference Axdif (Azdif) between the maximum value Axmax (Azmax) and the minimum value Axmin (Azmin) is plotted along the time axis, which is the horizontal axis, is stored in the stopped-judgment means 5, and the stopped-judgment means 5 compares this set value Ta with the absolute value of the difference Axdif (Azdif) between the maximum value Axmax (Azmax) and the minimum value Axmin (Azmin), and when the absolute value of the difference Axdif (Azdif) is equal to the set value Ta or less, it determines that the vehicle is stopped, and when the absolute value of the difference Axdif (Azdif) is greater than Ta, it determines that the vehicle is moving.

The judgment result from the stopped-judgment means 5 that the vehicle is moving is sent to the velocity-calculation means 3, and based on judgment result from the stopped-judgment means 5, the velocity-calculation means 3 uses the velocity Vn-1 at the previous time n-1 calculated for each fixed time, Ax obtained from the acceleration sensor 1 and the road-surface angle α that was obtained from the angle-calculation means 2 to calculate the velocity Vn at the current time n as Vn = Vn-1 + (Ax - g sinα) dt.

Fig. 2 also shows a block diagram of the vehicle stopped-judgment apparatus of claim 3 wherein, when the data for a plurality of acceleration components Axn or Azn saved in the velocity-calculation apparatus is taken to be 1 set, the stopped-judgment means 5 determines from the data of a plurality of sets whether or not there is a plurality of sets in which the absolute value of the difference between the maximum value and minimum value of the acceleration components obtained by the first calculation means 41 exceeds the certain set value Ta.

As described above, when the group of data from Axn1 to Axn5 is taken to be one set, than about 10 sets (a to j) such as a = Ax01 to Ax05, b = Ax11 to Ax15, c = Ax21 to Ax25, d = Ax31 to Ax35, ... i = Ax81 to Ax85, and j = Ax91 to Ax95 are always stored in the velocity-calculation apparatus, and from these 10 sets, the stopped-judgment means 5 determines whether or not number of sets in which the absolute value of the difference between the maximum value and minimum value of the acceleration components obtained from by the aforementioned first calculation means 41 ( |Axmax - Axmin|, or |Azmax - Azmin|) exceeds the aforementioned set value Ta is a preset number (for example 5), and when the number of sets exceeding the aforementioned set value Ta is 5 sets or more, it determines that the vehicle is moving, and when the number of sets is less than 5 sets, it determines that the vehicle is stopped. The 5 sets referred to here can be 5 continuous sets such as set 3 to set 7, or can be any 5 sets from among the 10 sets.

In this case as well, the judgment result from the stopped-judgment means 5 that the vehicle is moving is sent to the velocity-calculation means 3, and based on the judgment results from the stopped-judgment means 5, the velocity-calculation means 3 uses the velocity Vn-1 at the previous time n-1 calculated for each fixed time, Ax obtained from the acceleration sensor 1 and the road-surface angle α that was obtained from the angle-calculation means 2 to calculate the velocity Vn at the current time n as Vn = Vn-1 + (Ax - g sinα) dt.

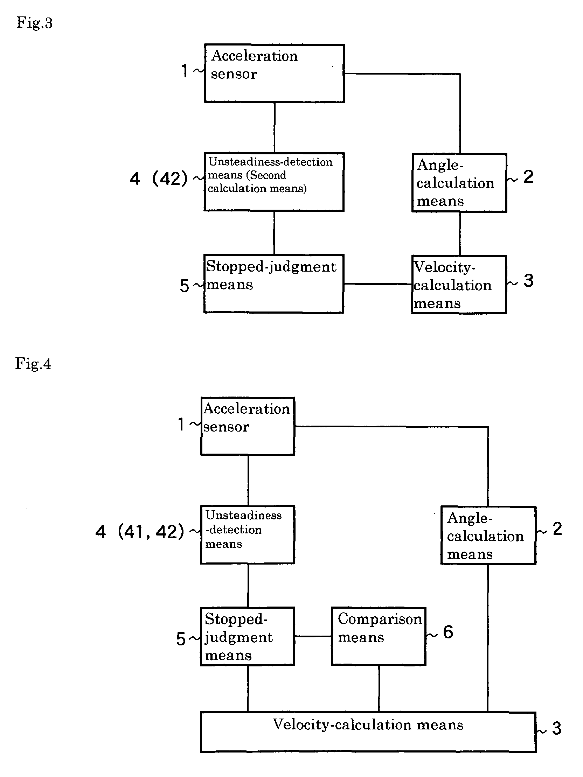

Fig. 3 is a block diagram of the vehicle stopped-judgment apparatus of claim 4 wherein the unsteadiness-detection means 4 comprises a second calculation means 42 such as a CPU that calculates the square root of the sum of the square of the difference between the average value Axav (Azav) of a plurality of acceleration data A that is stored for each time, and the acceleration component Axn (Azn) at each time (√Σ (Axn (or Azn) - Axzv (or Azav))²) as the size of the unsteadiness; and the stopped-judgment means 5 performs a comparison to determine whether or not the standard deviation Ax (Az) obtained by the second calculation means 42 exceeds a certain set value Tadev.

The data for Ax or Az detected by the acceleration sensor 1 at each fixed time (Axn, Azn) is sent to the second calculation means 42 of the unsteadiness-detection means 4, and during calculation after the second calculation means 42 calculates the average value Axav or Azav for all Ax or all Az from that plurality of data (Axn, Azn), it calculates the square root of the sum of the square of the difference between this average value Axav and Azav and the data Axn, Azn, √Σ(Axn -Axav)² or √Σ(Azn - Azav)² (standard deviation of Ax or Az). During calculation, the calculation results for the standard deviation of Ax or Az is sent to the stopped-judgment means 5.

As shown in Fig. 7, a certain set value Tadev (m/s²), which clearly shows the boundary values between being stopped and moving when the standard deviation of Ax or Az is plotted along the time axis, which is the horizontal axis, is stored in the stopped-judgment means 5, and the stopped-judgment means 5 compares this set value Tadev with the aforementioned standard deviation of Ax or Az, and when the value of the standard deviation of Ax or Az is equal to the set value Tadev or less, it determines that the vehicle is stopped, and when the value of the standard deviation of Ax or Az is greater than the set value Tadev, it determines that the vehicle is moving.

The judgment result that the vehicle is moving is sent to the velocity-calculation means 3, and based on the judgment result from the stopped-judgment means 5, the velocity-calculation means 3 uses the velocity Vn-1 at the previous time n-1 that is calculated at each fixed time, Ax obtained from the acceleration sensor 1, and the road-surface angle α obtained from the angle-calculation means 2, to calculate the velocity Vn at the current time n as Vn = Vn-1 + (Ax - g sinα) dt.

Fig. 4 is a block diagram of the vehicle stopped-judgment apparatus of claim 5 that comprises a comparison means 6 such as a CPU that, when the vehicle velocity is divided into at least two velocity ranges, low velocity and high velocity, determines which velocity range the vehicle velocity calculated by the velocity-calculation means 3 belongs to, and where based on the judgment result by the comparison means 6, the unsteadiness-detection means 4 detects the size of the unsteadiness, and the stopped-judgment means 5 performs a comparison to determine whether or not the size of the aforementioned unsteadiness for each velocity range exceeds a certain set value.

The judgment result from the comparison means 6 of which velocity range the vehicle velocity belongs to is sent to the stopped-judgment means 5, and based on the judgment result from the comparison means 6, or in other words, based on the judgment result of which velocity range, low velocity, medium velocity or high velocity, that the vehicle velocity belongs to, the stopped-judgment means 5 performs a comparison to determine whether or not the size of the unsteadiness found by the unsteadiness-detection means 4 (first calculation means 41, or second calculation means 42) exceeds a certain value, and when the size does not exceed that value, it determines that the vehicle is stopped, and when the size does exceed the value, it determines that the vehicle is moving.

As described above, when the unsteadiness-detection means 4 is the first calculation means 41, the stopped-judgment means 5 performs a comparison to determine whether or not the absolute value of the difference between the maximum value Axmax (Azmax) and minimum value Axmin (Azmin) exceeds a certain set value Ta; and when the unsteadiness-detection means 4 is the second calculation means 42, the stopped-judgment means 5 performs a comparison to determine whether or not the standard deviation of Ax or Az exceeds a certain value Tadev. The judgment result that the vehicle is moving is sent to the velocity-calculation means 3, and the velocity-calculation means 3 uses the velocity Vn-1, Ax and α to calculate the velocity Vn at the current time n.

An example of the operating procedure of the vehicle stopped-judgment apparatus shown in Fig. 4 is shown in part of Fig. 5. As described above, the angle-calculation means 2 calculates the road-surface angle α from the acceleration information Ax and Az obtained from the acceleration sensor 1, and the velocity-calculationmeans 3 uses the road-surface angle α calculated by the angle-calculation means 2 and Ax from the acceleration sensor 1 to calculate the velocity Vn at the present time n. From this velocity Vn, the comparison means 6 determines which velocity range, low velocity, medium velocity or high velocity the current vehicle velocity belongs to.

On the other hand, in the unsteadiness-detection means 4 that receives the acceleration information Ax and Az from the acceleration sensor 1, the first calculation means 41 finds the absolute value of the difference Axdif (Azdif) between the maximum value Axmax (Azmax) and minimum value Axmin (Azmin) of the acceleration A, or the second calculationmeans 42 calculates the square root of the sum of the square of the difference between average value Axav or Azav of the acceleration A data and the acceleration component Axn, Azn at each time, √Σ(Axn -Axav)² or √Σ(Azn - Azav)².

Based on the calculation result from the unsteadiness-detection means 4 and the judgment result from the comparison means 6, or in other words, the judgment result of which velocity range, low velocity, medium velocity or high velocity, the vehicle velocity belongs to, the stopped-judgment means 5 performs a comparison to determine whether or not the size of the unsteadiness detected by the unsteadiness-detection means 4 (41, 42) exceeds a certain set value, and determines whether or not the vehicle is stopped.

For example, when the comparison means 6 determines that the vehicle velocity is medium velocity or high velocity, even though the absolute value of the difference Axdif (Azdif) between the maximum value Axmax (Azmax) and the minimum value Axmin (Azmin) obtained by the first calculation means 41 is the set value Ta or less, this comparison result is contrary to the judgment by the comparison means 6, so the stopped-judgment means 5 does not determine that the vehicle is stopped. When the comparison means 6 determines that the vehicle velocity is low velocity, and when the absolute value of the difference Axdif (Azdif) between the maximum value Axmax (Azmax) and the minimum value Axmin (Azmin) obtained by the first calculation means 41 is equal to the set value Ta or less, that comparison result suits the judgment by the comparison means 6, so the stopped-judgment means 5 determines that the vehicle is stopped.

On the other hand, when the comparison means 6 determines that the vehicle velocity is low velocity, and in the stopped-judgment means 5 when the result is obtained that the absolute value of the difference Axdif (Azdif) between the maximum value Axmax. (Azmax) and the minimum value Axmin (Azmin) obtained by the first calculation means 41 exceeds the set value Ta, that comparison result is contrary to the judgment by the comparison means 6, so the stopped-judgment means 5 does not determine that the vehicle is moving. When the comparison means 6 determines that the vehicle velocity is medium velocity to high velocity, and when the absolute value of the difference Axdif (Azdif) exceeds the set value Ta, that comparison result suits the judgment by the comparison means 6, so the stopped-judgment means 5 determines that the vehicle is moving. The same conclusion is obtainedwhen performing comparison using the results from the second calculation means 42.

In the stopped-judgment means 5, when the judgment results match the comparison results from the comparison means 6, and the stopped-judgment means 5 determines that the vehicle is stopped, operation by the vehicle stopped-judgment apparatus ends. When the stopped-judgment means 5 determines that the vehicle is moving, then continuing, in order to improve the accuracy of the vehicle velocity Vn, the road-angle α is calculated again, and the vehicle velocity Vn is calculated again using that calculated value.

In Fig. 5, after the stopped-judgment means 5 determines that the vehicle is moving, using the acceleration information Ax, Az obtained from the acceleration sensor 1, the third calculation means 7 calculates the value |Ax² + Az² - g²| for each time, or the fourth calculation means 8 calculates the standard deviation of Ax, and the angle-calculation means 2 calculates the road-surface angle α for each time, and also calculates the difference αdif between the new calculated value αnew and previous calculated value αold (αnew -αold) (°). The standard deviation of Ax is the square root of the sum of the square of the difference between the average value Axav of the acceleration component Axn that is parallel to the road surface and the acceleration component Axn for each time (√Σ(Axn-Axav)²).

When the vehicle is stopped (Vn= 0), the vehicle acceleration is Aa = 0, so from Fig. 9 |Ax² + Az² - g²| = 0 comes into effect, however, when the vehicle is accelerating up an upward grade or down a downward grade, Aa is added to Agx, and as a result I Ax² + Az² - g²| > 0. Here, the effect of the vehicle acceleration Aa remarkably appears from the effect of the road-surface angle α, so by confirming that the value of |Ax² + Az² - g²|, which includes Ax and Az at the time when the angle-calculation means 2 calculates road-surface angle α using the acceleration components Ax and Az obtained from the acceleration sensor 1, satisfies the condition of being in a range less than a certain set value T1 (m/s²)²) in which the effect of the vehicle acceleration Aa appears, 0 < |Ax² + Az² - g²| < T1, it is possible to obtain a more accurate road-surface angle α.

Moreover, the effect of the vehicle acceleration Aa remarkably appears in the standard deviation of Ax, so instead of the value |Ax² + Az² - g²|, the fourth calculation means 8 calculates the standard deviation of Ax, and it was found that by using the condition of whether or not this standard deviation is less than a certain set value T2 (m/s²) in which the effect of the unsteadiness appears in the acceleration Ax or Az caused by vehicle vibration due to engine vibration or an uneven road surface, or caused by suspension vibration, it is possible to obtain an even more accurate road-surface angle α. In other words, by confirming that the value of the standard deviation of Ax, which includes Ax and Az at the time when the angle-calculation means 2 calculates road-surface angle α using the acceleration components Ax and Az obtained from the acceleration sensor 1, satisfies the condition of being in a range less than a certain set value T2 (m/s²)²) in which the effect of the vehicle acceleration Aa notably appears, standard deviation of Ax < T2, it can be seen that the accuracy of the road-surface angle α is high.

Next, the second comparison means 9 determines which velocity range the previous calculated value (old road-surface angle) αoldbelong to when the velocity is divided into a plurality of velocity ranges, and from the difference αdif between the new calculated value αnew and the previous calculated value αold calculated by the aforementioned angle-calculation means 2, the second comparison means 9 determines whether or not the absolute value of the new calculated value αnew has an increasing tendency, and when it does not have an increasing tendency, then the third comparison means 10 determines which velocity range, lowvelocity, medium velocity or high velocity, the vehicle velocity calculated by the velocity-calculation means 3 belongs to. Here, for example, when it is determined that the vehicle velocity belongs to either the medium-velocity or high-velocity range, then next, the fourth comparison means 11 determines whether or not the condition, 0 < |Ax² + Az² - g²| < T1, and the condition, standard deviation of Ax < T2, continues for a set amount of time T3 (sec). When the absolute value of the new calculated value αnew has an increasing tendency, then as will be described later, there is a high possibility that it contains error, so operation does not continue after that.

When the fourth comparison means 11 determines that the time is T3 or less, then the angle-update means 13 continues to use the previous calculated value αold without updating it with the new calculated valueanew. When the fourth comparison means 11 determines that the time is greater than T3, then the angle-comparison means 12 further determines whether or not the difference αdif between the new calculated value αnew and the previous calculated value αold (αnew - αold) is greater than a certain set value M°(□ N°).

When the angle-comparison means 12 determines that the difference αdif between the new calculated value αnew and the previous calculated value αold is the set value M°or less, the angle-update means 13 takes the value obtained by adding the difference to the previous calculated value (αold +αdif) as the new calculated value αnew and updates the previous calculated value αold. When the angle-comparison means 12 determines that the difference is greater than M°, the angle-update means 13 calculates the value (αold + Δα) obtained by adding a value Δα (1°to 2°) that is sufficiently smaller than the difference αdif between the new calculated value αnew and the previous calculated value αold to the previous calculated valueαold as the new calculated value αnew after update, and updates the previous calculated value αold. Based on this new calculated value αnew after update, the velocity-calculation means 3 newly calculates the vehicle velocity Vn.

Except in the case of a special road surface, once an angle, for example ±5°to 7°or more, is calculated as the estimated practical maximum value of the road-surface angle α, it is unimaginable that the value calculated next will have a further increasing tendency, so once this angle has been calculated as the maximum estimated value, then if the angle calculated next has an increasing tendency, then there is a high possibility that that calculated value contains error. Conversely, when the next new calculated value αnew has a decreasing tendency even though the previous calculated value αold is ±5°to 7°or more, then it can be said that there is a low possibility that the new calculated value αnew contains error.

Therefore, as described above, adding the judgment (second comparison means 9) to determine whether the road-surface angle has an increasing tendency or decreasing tendency by comparing the previous calculated valueaold with the new calculated value anew, when the second comparison means 9 determines that the absolute value of the previous calculated valueαold is a certain set value N°or greater, and that the absolute value of the new calculated value αnew is greater than the absolute value of the previous calculated value αold, or in other words, when, for example, the previous calculated value αold is ±5°to 7°or more and the absolute value of the new calculated value αnew has an increasing tendency, then the new calculated value αnew is not used and the previous calculated valueαold is not updated, and by updating the previous calculated value αold to the new calculated value αnew at all other times, it becomes possible to reduce the effect of engine vibration and the suspension and to calculate a more accurate angle.

More specifically, when the absolute value N°is set as the maximumpractically imaginable road-surface angle (for example, 5°to 7°, but changes according to the situation), then when the absolute value of the previous calculated value αold is N°or greater, and the absolute value of the new calculated value αnew is greater than the absolute value of the previous calculated value αold, the absolute value of the new calculated value αnew exceeds the maximum estimated road-surface angle ±N° and has an increasing tendency, so it is considered that there is a high possibility that the new calculated value αnew contains error. In these cases, the previous calculated value αold is maintained as saved, and is not updated to the new calculated value αnew.

When the absolute value of the previous calculated value αold is less than N°, it is considered that there is a low possibility that the new calculated value αnew contains error even when the absolute value of the new calculated value αnew has an increasing tendency. Also, even when the absolute value of the previous calculated value αold is N° or more and the absolute value of the new calculated value αnew has a decreasing tendency, it is considered that there is a low possibility that new calculated valueanew contains error. Moreover, when the absolute value of the previous calculated value αold is less than N° and the absolute value of the new calculated value αnew has a decreasing tendency, it is considered that there is a low possibility that it contains error. In these cases, the previous calculated value αold is updated to the new calculated valueanew.

Also, since it is unimaginable that for an actual road the road-surface angle α will change suddenly, when the difference αdif (°) between the new calculated angle αnew (°) and the previous calculated angle αold (°) is greater than a certain set value M°, for example 4°to 5° (may be greater or less than this), it is considered that there is a high possibility that the new calculated value αnew contains error. Therefore, as described above, by way of the judgment by the angle-comparison means 12, when the angle difference αdif is 5°or less, by using the value obtained by adding that angle difference αdif to the previous calculated angle αold, or in other words, by using the new calculated value as the new angle αnew (αnew = αold + αdif), and when the angle difference αdif is greater than 5°, by using the value obtained by adding, for example,Δα (1°to 2°) that is sufficiently smaller than the maximum estimated value of the angle difference to the previous angleαold as the new angle αnew (αnew = αold + Δα), it becomes possible to reduce the error in the new calculated value.
[Explanation of Reference Numbers]
- 1: Acceleration sensor
- 2: Angle-calculation means
- 3: Velocity-calculation means
- 4: Unsteadiness-detection means
- 41: First calculation means
- 42: Second calculation means
- 5: Stopped-judgment means
- 6: Comparison means
- 7: Third calculation means
- 8: Fourth calculation means
- 9: Second comparison means
- 10: Third comparison means
- 11: Fourth comparison means
- 12: Angle-comparison means
- 13: Angle-update means

## Claims

1. A vehicle stopped-judgment apparatus in a velocity-calculation apparatus comprising: an angle-calculation means that calculates the road-surface angle from the acceleration component Ax that is parallel with the road surface and acceleration component Az that is perpendicular to the road surface and that are obtained from an acceleration sensor installed in a vehicle; and a velocity-calculation means that calculates the vehicle velocity using said road-surface angle and said acceleration component Ax obtained from said acceleration sensor; and that comprises: an unsteadiness-detection means that detects the size of unsteadiness in the acceleration component Ax or Az obtained from said acceleration sensor; and a stopped-judgment means that performs a comparison to determine whether or not said size of unsteadiness exceeds a certain set value, and when it does not exceed the set value, determines that said vehicle is stopped.

2. The vehicle stopped-judgment apparatus in a velocity-calculation apparatus of claim 1 comprising: a first calculationmeans that finds the absolute value of the difference between the maximum value and minimum value as the size of the unsteadiness from a plurality of acceleration component data Ax or Az that is stored for each time by said unsteadiness-detection means; and wherein said stopped-judgment means performs a comparison to determine whether or not the absolute value of the difference between the maximum value and minimum value of the acceleration component obtained by said first calculation means exceeds a certain set value.

3. The vehicle stopped-judgment apparatus in a velocity-calculation apparatus of claim 2 wherein, when the data of said plurality of acceleration components Axn or Azn that are stored in said velocity-calculation apparatus are taken to be 1 set, said stopped-judgment means determines from a plurality of sets of data whether or not there is a plurality of sets in which the absolute value of the difference between the maximum value and minimum value of the acceleration components obtained by said first calculation means exceeds a certain set value.

4. The vehicle stopped-judgment apparatus in a velocity-calculation apparatus of claim 1 comprising: a second calculation means that calculates the square root of the sum of squares of the difference between the average value of a plurality of acceleration component data Ax or Az at each time that is stored by said unsteadiness-detection means and the acceleration component at each time as the size of said unsteadiness; and wherein said stopped-judgment means performs a comparison to determine whether or not the standard deviation of the acceleration component obtained by said second calculation means exceeds a certain set value.

5. The vehicle stopped-judgment apparatus in a velocity-calculation apparatus of any one of the claims 1 to 4 comprising: a comparison means that, when the vehicle velocity is divided into at least the two velocity ranges low velocity and high velocity, determines which of said velocity ranges the vehicle velocity calculated by said velocity-calculation means belongs to; and wherein, based on the judgment results by said comparison means, said unsteadiness-detection means detects the size of unsteadiness, and said stopped-judgment means performs a comparison to determine whether or not the size of said unsteadiness for each said velocity range exceeds a certain set value.

6. A vehicle stopped-judgment method in a velocity-calculation apparatus comprising: an angle-calculation means that calculates the road-surface angle from the acceleration component Ax that is parallel with the road surface and acceleration component Az that is perpendicular to the road surface and that are obtained from an acceleration sensor installed in a vehicle; and a velocity-calculation means that calculates the vehicle velocity using said road-surface angle and said acceleration component Ax obtained from said acceleration sensor; and that comprises: a process in which an unsteadiness-detection means detects the size of unsteadiness in the acceleration component Ax or Az obtained from said acceleration sensor; and a process in which a stopped-judgment means performs a comparison to determine whether or not said size of unsteadiness exceeds a certain set value, and when it does not exceed the set value, determines that said vehicle is stopped.

7. The vehicle stopped-judgment method in a velocity-calculation apparatus of claim 6 comprising: a process in which a first calculation means that finds the absolute value of the difference between the maximum value and minimum value as the size of the unsteadiness from among a plurality of acceleration component data Ax or Az that is stored for each time by said unsteadiness-detection means; and a process in which said stopped-judgment means performs a comparison to determine whether or not the absolute value of the difference between the maximum value and minimum value of the acceleration component Ax orAz obtained by said first calculationmeans exceeds a certain set value.

8. The vehicle stopped-judgment method in a velocity-calculation apparatus of claim 7 comprising a process wherein, when the data of said plurality of acceleration components Axn or Azn that are stored in said velocity-calculation apparatus are taken to be 1 set, said stopped-judgment means determines from a plurality of sets of data whether or not there is a plurality of sets in which the absolute value of the difference between the maximum value and minimum value of the acceleration components obtained by said first calculation means exceeds a certain set value.

9. The vehicle stopped-judgment method in a velocity-calculation apparatus of claim 6 comprising: a process in which second calculation means that calculates the square root of the sum of squares of the difference between the average value of a plurality of acceleration component data Ax or Az at each time that is stored by said unsteadiness-detection means and the acceleration component at each time as the size of said unsteadiness; and a process in which said stopped-judgment means performs a comparison to determine whether or not the standard deviation of the acceleration component obtained by said second calculation means exceeds a certain set value.

10. The vehicle stopped-judgment method in a velocity-calculation apparatus of any one of the claims 6 to 9 comprising: a process in which, when the vehicle velocity is divided into at least the two velocity ranges low velocity and high velocity, a comparison means determines which of said velocity ranges the vehicle velocity calculated by said velocity-calculation means belongs to; a process in which, based on the judgment results by said comparison means, said unsteadiness-detection means detects the size of unsteadiness; and a process in which said stopped-judgment means performs a comparison to determine whether or not the size of said unsteadiness for each said velocity range exceeds a certain set value.
